# EUROPÄISCHE PATENTANMELDUNG

(11) **EP 0 879 792 A2**
(43) Veröffentlichungstag der Anmeldung: **25.11.1998**
(21) Anmeldenummer: 98107153.3
(22) Anmeldetag: 20.04.1998
(51) Int. Cl.: C02F 1/00, C02F 1/30, C02F 1/38

(54) **Verfahren zur Reduzierung des Algen- und Nährstoffgehalts eines Gewässers und Vorrichtung zur Durchführung dieses Verfahrens**

(30) Priorität: 18.04.1997 DE 19716169
(71) Anmelder: Umweltschutz Nord GmbH & Co., 27767 Ganderkesee (DE)
(72) Erfinder: Richert, Olaf, 28856 Syke-Barrien (DE); Stelling, André, 27367 Sottrum (DE)
(74) Vertreter: Eisenführ, Speiser & Partner

(57) **Zusammenfassung**

Die Erfindung betrifft ein Verfahren zur Reduzierung des Algen- und Nährstoffgehalts eines Gewässers (1), wobei das Besondere dieses Verfahrens darin besteht, daß dem Gewässer (1) algenhaltige Wassermengen entnommen werden, dem Gewässer (1) nährstoffhaltige Wassermengen entnommen werden, ein Gemenge der entnommenen Wassermengen derart bestrahlt wird, daß die Algen zumindest einen Teil der Nährstoffe aufgrund von photosynthetischer Aktivierung aufnehmen, die Algen zumindest teilweise vom Wasser getrennt werden, und das nährstoff- und algenreduzierte Wasser in das Gewässer (1) zurückgeleitet wird. Ferner betrifft die Erfindung eine Vorrichtung zur Durchführung dieses Verfahrens, welche gekennzeichnet ist durch eine Einrichtung (2, 3, 4) zur Entnahme algenhaltiger Wassermengen, eine Einrichtung (2, 3, 4) zur Entnahme nährstoffhaltiger Wassermengen, eine Einrichtung (5) zur Bestrahlung eines Gemenges der entnommenen Wassermengen, wobei die Algen zumindest einen Teil der Nährstoffe aufgrund von photosynthetischer Aktivierung aufnehmen, eine Einrichtung (29) zum zumindest teilweise Trennen der Algen vom Wasser, und eine Einrichtung zum Zurückleiten des nährstoff- und algenreduzierten Wassers in das Gewässer (1).

## Beschreibung

Die Erfindung betrifft ein Verfahren zur Reduzierung des Algen- und Nährstoffgehalts eines Gewässers, insbesondere eines Oberflächengewässers. Des weiteren betrifft die Erfindung eine Vorrichtung zur Durchführung dieses Verfahrens.

Die Eutrophierung von Gewässern, insbesondere von stehenden Gewässern, stellt aufgrund verschiedener physikalischer, chemischer und vor allem biologischer Faktoren ein zunehmend größer werdendes Problem dar. Insbesondere führt die Einleitung von mit Nährstoffen übertrachtetem Wasser in Seen zu einem verstärkten Algenwachstum aufgrund übermäßiger Nährstoffaufnahme seitens der Algen. Hier sind speziell Stickstoff- und vor allem Phosphorverbindungen als besonders kritisch anzusehen, die schon in sehr geringen Mengen eine gesteigerte Algenentwicklung mit einer in den Sommermonaten erhöhten Algenblüte verursachen. Nach Absterben der Algen im darauffolgenden Winter nimmt dann die Verschlammung des Gewässers zu. Die Folgen sind Sauerstoffschwund, Fischsterben und die Entstehung von bis zu mehreren Metern dicken Faulschlammschichten, die den Grund des Gewässers bedecken und alles Leben im Keim ersticken.

Bei bekannten Verfahren zur Sanierung eutrophierter Gewässer werden die entsprechenden Nährstoffe zumeist mit Hilfe von Fällungschemikalien oder anderen Hilfsstoffen ausgefällt oder adsorptiv gebunden, wobei oftmals ein großer Überschuß an derartigen Fällungsmitteln erforderlich ist und erhebliche Mengen deponiebedürfender Fällungsschlämme anfallen. Die zu erreichenden Phosphatkonzentrationen in einem derart sanierten Gewässer bleiben dennoch oftmals leider noch über dem Grenzwert für eine kritische Algenentwicklung. Nicht zuletzt können bei der Rückleitung des behandelten Wassers unerwünscht Fällungschemikalien in das Gewässer gelangen und sind die Kosten für die Fällungsverfahren relativ hoch.

Aufgabe der vorliegenden Erfindung ist es, ein Verfahren und eine Vorrichtung zur Reduzierung des Algen- und Nährstoffgehalts eines Gewässers zur Verfügung zu stellen, das auf einfache Weise und im wesentlichen ohne den Zusatz von Chemikalen sowie kostengünstig und weitgehend automatisiert durchgeführt werden kann.

Diese Aufgabe wird bei dem Verfahren der eingangs genannten Art erfindungsgemäß dadurch gelöst, daß dem Gewässer algenhaltige Wassermengen entnommen werden, dem Gewässer nährstoffhaltige Wassermengen entnommen werden, ein Gemenge der entnommenen Wassermengen derart bestrahlt wird, daß die Algen zumindest einen Teil der Nährstoffe aufgrund von photosynthetischer Aktivierung aufnehmen, die Algen zumindest teilweise vom Wasser getrennt werden, und das nährstoff- und algenreduzierte Wasser in das Gewässer zurückgeleitet wird. Des weiteren wird die Aufgabe der Erfindung durch eine Vorrichtung der eingangs genannten Art gelöst, welche durch eine Einrichtung zur Entnahme algenhaltiger Wassermengen, eine Einrichtung zur Entnahme nährstoffhaltiger Wassermengen, eine Einrichtung zur Bestrahlung eines Gemenges der entnommenen Wassermengen, wobei die Algen zumindest einen Teil der Nährstoffe aufgrund von photosynthetischer Aktivierung aufnehmen, eine Einrichtung zum zumindest teilweise Trennen der Algen vom Wasser und eine Einrichtung zum Zurückleiten des nährstoff- und algenreduzierten Wassers in das Gewässer gekennzeichnet ist.

Die Vorteile der Erfindung liegen insbesondere darin, daß die im Gewässer vorhandenen Algen zur Reduzierung der ebenfalls im Gewässer enthaltenen Nährstoffe eingesetzt werden. Hierzu werden Wassermengen mit möglichst hohem Algen- und Nährstoffgehalt dem Gewässer entnommen und ein Gemenge dieser Wassermengen zur gesteigerten Nährstoffaufnahme bestrahlt. Die Bestrahlung erfolgt erfindungsgemäß außerhalb des Gewässers, da dort die Parameter für eine optimierte Nährstoffaufnahme besser eingestellt werden können. Die Bestrahlungsdauer des Gemenges liegt hierbei vorzugsweise im Minutenbereich, um große Wasservolumina innerhalb kurzer Zeit mittels des erfindungsgemäßen Verfahrens zu reinigen. Im Durchlaufbetrieb lassen sich somit große Durchsatzmengen erreichen, so daß beispielsweise auch ausgedehnte Seen saniert werden können. Die Algen nehmen während der kurzen Bestrahlungszeit die Nährstoffe - insbesondere Phosphate - auf, ohne daß während der Bestrahlungsphase ein Algenwachstum angestrebt wird oder vonnöten ist. Stattdessen speichern die Algen die Nährstoffe in Reservoirs und geben diese erst bei Zersetzung oder Zerstörung ab.

Nach der Bestrahlung des Gemenges kann die anschließend abgetrennte Algenbiomasse zur weiteren wirtschaftlichen Verwertung, beispielsweise zur Schwermetallsorption aus Abwässern, eingesetzt werden. Ein weiterer Vorteil des erfindungsgemäßen Verfahrens liegt darin, daß das zu reinigende Wasser durch die photosynthetische Sauerstoffproduktion der Algen während der Nährstoffaufnahme und - umwandlung mit Sauerstoff angereichert wird. Schließlich entstehen bei Einsatz des erfindungsgemäßen Verfahrens keinerlei deponiebedürfende Fällprodukte oder sonstige Abfallstoffe.

Das erfindungsgemäße Verfahren ist besonders geeignet, um Oberflächengewässer wie beispielsweise natürliche oder künstlich angelegte Seen oder auch Flüsse zu reinigen.

Das erfindungsgemäße Verfahren wird vorteilhafterweise während der gesamten Wachstumsphase der Mikroalgen eingesetzt, welche üblicherweise zum Ende des Winters beginnt und bis zum nächsten Winteranfang andauert. Im Winter sind die Nährstoffkonzentrationen, insbesondere die Phosphatkonzentrationen, sehr hoch, da zu dieser Zeit die Algen absterben und die im Sommer aufgenommenen Nährstoffe - eventuell auch in abgewandelter Form - wieder an das Wasser abgeben. Mit zunehmender Lichteinstrahlung und steigenden Temperaturen im Frühjahr nimmt die neue Algengeneration diese im Wasser gelösten Nährstoffe auf. In den Sommermonaten findet dann eine dementsprechend erhöhte Algenblüte statt. Um dies zu verhindern, sollte schon am Anfang der Wachstumsphase damit begonnen werden, algen- und nährstoffhaltiges Wasser erfindungsgemäß zu behandeln. Auf diese Weise wird schon frühzeitig die Algenmenge im Gewässer reduziert, so daß im darauffolgenden Winter nur kleine Algenmengen entsprechend geringe Nährstoffmengen in das Wasser abgeben können. Das Verfahren sollte in den folgenden Jahren wiederholt angewendet werden, bis sich ein ökologisch gesundes Verhältnis von Algen und Nährstoffen eingestellt hat.

Das angegebene Verfahren eignet sich insbesondere zur gleichzeitigen Durchführung mit herkömmlichen Entschlammungsmaßnahmen, wie beispielsweise der Abtragung oberer Gewässerbodenschichten mittels geeigneter Bagger. Der hierdurch hervorgerufene Anstieg des Trübstoffanteils im Wasser beeinträchtigt die Durchführung des erfindungsgemäßen Verfahrens nicht in nennenswertem Maße.

Besonders bevorzugt werden der Einfachheit halber die algenhaltigen und die nährstoffhaltigen Wassermengen dem Gewässer in einem gemeinsamen Schritt entnommen. Dies kann beispielsweise durch Ableiten der Wassermengen mittels eines herkömmlichen Absaugrohres erfolgen.

Vorteilhafterweise wird ein positionierbarer Skimmer zur Entnahme der algenhaltigen und gegebenenfalls der nährstoffhaltigen Wassermengen eingesetzt, mit dem beispielsweise Algenteppiche großflächig abgesaugt werden können. Der Skimmer wird bevorzugt etwa 10 bis 50 cm unterhalb der Gewässeroberfläche positioniert, da in dieser Höhe die größte Konzentration an photosynthetisch aktiven Mikroalgen vorhanden ist. Damit Kleinlebewesen nicht mitabgesaugt werden, weist der Skimmer vorteilhafterweise entsprechend ausgebildete Gaze auf.

Besonders bevorzugt wird das Gemenge der entnommenen algenhaltigen und nährstoffhaltigen Wassermengen einem Photobioreaktor zugeführt, in welchem das Gemenge mit natürlichem und/oder künstlichem Licht bestrahlt wird. Das künstliche Licht wird beispielsweise nachts verwendet, um eine kontinuierlich ablaufende Photosynthese zu erreichen. Es kann aber auch tagsüber zusätzlich zum Sonnenlicht eingeschaltet werden. Das natürliche und künstliche Licht liefert die Energie zur schnellen Nährstoffaufnahme seitens der Algen, insbesondere von Phosphaten, aber auch von Ammonium, Nitraten und Nitriten. Die Nährstoffaufnahme kann zusätzlich durch einen im Photobioreaktor induzierten Kohlendioxidmangel unterstützt werden.

Bei der photosynthetischen Aktivierung entsteht Sauerstoff, welches sich im Wasser anreichert. Da das Wasser nach dem Bestrahlungs- und Abtrennvorgang in das Gewässer zurückgeleitet wird, steigt hierdurch auf natürliche Weise der Sauerstoffgehalt des Gewässers.

Besonders bevorzugt weist der Photobioreaktor ein aufrecht stehendes Trägergestell und mindestens eine am Trägergestell angeordnete umlaufende, transparente rohrförmige Leitung auf, durch welche das Gemenge geleitet wird. Vorteilhafterweise besteht die Leitung aus witterungsbeständigem und flexiblem Kunststoff. Der Durchmesser der rohrförmigen Leitung sowie der vertikale Abstand der Windungen ist einer optimalen Lichtausbeute angepaßt. Weiterhin ist die Verweildauer des Gemenges im Photobioreaktor auf eine in zeitlicher Hinsicht optimierte Lichtabsorption seitens der Algen abstimmbar.

Vorzugsweise ist das Trägergestell weitgehend lichtdurchlässig ausgebildet, wobei die rohrförmige Leitung außen um das Trägergestell herum angeordnet ist. Die rohrförmige Leitung ist hierbei bevorzugt in mehreren übereinander liegenden Windungen gewickelt, wobei die Windungen vorzugsweise rotationssymmetrisch um eine zentrale Hochachse verlaufen.

Das Trägergestell des Photobioreaktors ist besonders bevorzugt in Form eines Kegelstumpfes ausgebildet, so daß auch die Leitungswindungen nach oben kegelstumpfförmig zulaufend angeordnet werden können. Diese Form ist dem Lauf der Sonne über den Tag angepaßt und ermöglicht somit im Vergleich zu einem etwa zylinderförmigen Trägergestell einen größeren Lichteintrag in die vom Gemenge durchflossene Leitung.

Der Photobioreaktor enthält vorzugsweise eine Einrichtung zum Leiten von Licht auf die rohrförmige Leitung. Diese Einrichtung weist bevorzugt oberhalb des Rohres eine Sammellinse auf, die das einfallende Sonnenlicht bündelt und deren optische Achse zu diesem Zweck vorteilhafterweise mit der Hochachse zusammenfällt, um welche die rohrförmige Leitung rotationssymmetrisch gewickelt ist.

Vorzugsweise umfaßt die Einrichtung zum Leiten von Licht einen - vorzugsweise der Linse gegenüber im Bodenbereich des Reaktors angeordneten - Innenreflektor mit einer spiegelnden Oberfläche, welcher sowohl das natürliche Licht als auch das künstliche Licht, welches durch die Linse und gegebenenfalls zwischen den Rohrwicklungen hindurch in den Reaktor eintritt, auf die rohrförmige Leitung spiegelt und die Lichtausbeute und somit die Nährstoffaufnahme seitens der Algen erhöht.

Vorteilhafterweise wird zur künstlichen Bestrahlung des Wassergemenges eine im Innenraum des Photobioreaktors positionierbare künstliche Lichtquelle verwendet, deren Spektrum bevorzugt den Wellenlängenbereich maximaler Lichtabsorption seitens der Algen abdeckt. Aus diesem Grunde wird beispielsweise eine Natrium-Dampflampe verwendet.

Vorteilhafterweise sind mehrere Photobioreaktoren hintereinander oder parallel geschaltet. Bei verschiedenartigen Einsätzen der Reaktoren kann somit den entsprechenden Bedürfnissen durch eine angepaßte Reaktoranzahl und -kapazität Rechnung getragen werden. Neben dieser modularen Verwendungsmöglichkeit sind die Reaktoren zudem bevorzugt - beispielsweise durch Anordnung auf verfahrbaren Containern - mobil einsetzbar ausgelegt.

Falls im zu sanierenden Gewässer mehr Nährstoffe vorhanden sind, als von den entnommenen Algen aufgenommen werden können, ist es vorteilhaft, das zu bestrahlende Gemenge zusätzlich mit gewässerfremden Algen zu beimpfen. Hierdurch wird vermieden, daß die dem Gewässer entnommenen nährstoffhaltigen Wassermengen ohne wesentliche Reduzierung des Nährstoffgehalts in das Gewässer zurückgeleitet werden. Gewässerfremde Algen können insbesondere in den Wintermonaten zur Nährstoffelimierung eingesetzt werden, da in dieser Zeit zwar der Nährstoffgehalt im Gewässer sehr groß, der Algenanteil jedoch sehr gering ist. Alternativ oder zusätzlich ist es auch möglich, die gewässerfremden Algen dem Gewässer zuzuführen.

Nach der Bestrahlung wird das Gemenge bevorzugt einer Separationseinrichtung zugeführt, in welchem Trübstoffe sowie die mit Nährstoffen angereicherten Algen kontinuierlich abgeschieden werden.

Besonders bevorzugt umfaßt die Separationseinrichtung einen dynamischen Filter mit einem kontinuierlich bewegten Bett aus körnigem Material, an welchem die Algen zur Trennung von dem Wasser zurückgehalten werden. Ein dynamischer Filter hat gegenüber herkömmlichen Filtern, bei denen periodisch Rückspülungen vorgenommen werden müssen, den Vorteil, daß ein kontinuierlicher und damit aufwandsarmer Betrieb möglich ist.

Als körniges Material werden vorzugsweise Sand und/oder Aktivtonerde (Al₂O₃) verwendet. Da Aktivtonerde bei nicht zu hohen pH-Werten effektiv Phosphate binden kann, ist ein entsprechender Einsatz dieses Materials insbesondere bei - im Vergleich zur Nährstoffkonzentration - geringen Algenkonzentrationen vorteilhaft. In diesem Fall sind auch nach der Bestrahlung des Gemenges noch mitunter hohe Phosphatkonzentrationen im Gemenge vorhanden, welche vor Rückleitung des Gemenges in das Gewässer abgetrennt werden sollen. Besonders bietet sich ein derartiges Vorgehen im Winter an, da dann die Phosophatkonzentration im Gewässer hoch und die Algenkonzentration niedrig ist.

Die Verwendung von Aktivtonerde bietet den weiteren Vorteil, daß diese ein Flockungsmittel für die Algen darstellt.

Da zu sanierende Oberflächengewässer häufig basisch sind (die Algen nehmen während der Wachstumsphase in dem Gewässer Kohlendioxid auf und geben Hydroxidionen ab), kann dem Gemenge vorteilhafterweise Kohlendioxid oder eine ähnlich wirkende Verbindung vor Durchlaufen des zumindest teilweise mit Aktivtonerde gefüllten dynamischen Filters zugesetzt werden, um den pH-Wert des Gemenges zu senken und damit die Phosphatbindungsrate seitens der Aktivtonerde zu erhöhen. Um die Löslichkeit des Kohlendioxids in dem Gemenge durch Verwirbelung zu erhöhen, wird das Kohlendioxid dem Gemenge vorzugsweise vor Einleitung in die Bestrahlungseinrichtung zugeführt, welche dem dynamischen Filter vorgeschaltet ist.

Ein bevorzugter dynamischer Filter der oben genannten Art ist als aufrecht stehender länglicher, im wesentlichen hohlzylindrischer Körper mit konisch zulaufendem unterem Ende ausgebildet. In seinem oberen Bereich weist der Filter einen Einlaß auf, von welchem ein zentrales Rohr in den unteren Bereich des Filterinnenraums führt. In dem Filterinnenraum ist das Filterbett angeordnet, durch welches das Gemenge in einer Aufwärtsbewegung hindurchgeführt wird, wobei die Algen und andere Trübstoffe im Filterbett festgehalten werden. Das filtrierte Wasser verläßt den Filter nach Passieren eines Filterüberlauf über einen ersten Auslaß. Eine Pumpe, beispielsweise eine Mammutpumpe, fördert das verschmutzte Filtermaterial vom unteren Bereich des Filters aufwärts zu einem zentral im Filterinnenraum angeordneten Wäscher, in welchem das Filtermaterial in einer Abwärtsbewegung von einem Teil des aufsteigenden filtrierten Wassers im Gegenstromprinzip gewaschen wird und auf das Filterbett zurückrieselt. Das so entstehende Waschwasser, welches die Algen und die Trübstoffe enthält, verläßt den Filter über einen zweiten Auslaß. Ein solcher dynamischer Filter ist beispielsweis als "DynaSand"-Filter der Firma Axel Johnson Engeneering GmbH bekannt.

Das filtrierte Wasser wird vorzugsweise in das Gewässer zurückgeleitet, während das Waschwasser - ggf. nach weiterer Eindickung beispielsweise mittels eines Sackfilters und einer eventuellen Teilseparation - bevorzugt mit aus dem Gewässer entnommenen Gewässermengen vermischt und erneut der Bestrahlung zugeführt wird, um ggf. ein ausgewogenes Verhältnis von Algen/Nährstoffen in der Bestrahlungseinrichtung einzustellen.

Zusätzlich oder alternativ kann die Separationseinrichtung weiterhin eine selbstaustragende Durchlaufzentrifuge und/oder einen Sandfilter, vorzugsweise mit einer Kammerfilterpresse oder einer entsprechenden Entwässerungseinrichtung, umfassen, wobei die Wasserqualität bzgl. Geruch und Aussehen verbessert und gleichzeitig durch Verwirbelung eine Sauerstoffanreicherung des in das Gewässer zurückzuleitenden Wassers erreicht wird. Der Sandfilter kann auch als Rückspülfilter ausgebildet sein. Ebenfalls zusätzlich oder alternativ kann ein Sackfilter aus einem geeigneten Webmaterial und/oder eine Sickergrube eingesetzt werden.

Vorteilhafterweise ist zwischen dem Photobioreaktor und der Separationseinrichtung ein Hydrozyklon zwischengeschaltet, in welchem Störstoffe bzw. Verunreinigungen abgeschieden werden. Zu diesen Störstoffen gehören beispielsweise Sand und Schlamm, die sich am Boden des Hydrozyklons abscheiden.

Aus Gründen der Verfahrensökonomie sind alle Schritte in einem kontinuierlichen Durchflußprozeß durchführbar.

Vorteilhafterweise kann die in der Separationseinrichtung abgeschiedene Algenbiomassezurweiteren Umweltsanierung eingesetzt werden, indem z.B. Schwermetalle aus im Gewässer mündenden Flüssen oder Bächen mit Hilfe der Algen absorbiert werden. Ebenfalls ist eine Verwendung der Algen zur Schwermetalleliminierung aus Abwässern in dementsprechend ausgelegten Vorrichtungen möglich.

In einem bevorzugten zusätzlichen Verfahrensschritt wird die Qualität des Gewässers und/oder des gereinigten Wassers vor Rückführung in das Gewässer mittels geeigneter Meßeinrichtungen ermittelt. Derartige Messungen betreffen beispielsweise den pH-Wert, den Trübstoffgehalt, die Sauerstoffkonzentration, die elektrische Leitfähigkeit und die Temperatur. Aufgrund der Meßwerte, die vorzugsweise mittels eines Computers ausgewertet werden, sind einzelne Verfahrensschritte mit entsprechenden Vorrichtungen regel- und steuerbar. Beispielsweise wird der ebenfalls meßbare Volumenstrom durch den oder die Photobioreaktoren auf eine optimierte Nährstoffaufnahme seitens der Algen abgestimmt. Die Meßwertaufnahme ist entweder zyklisch wiederholbar oder kontinuierlich durchführbar.

Bevorzugt ist die Steuerzentrale von der Sanierungsvorrichtung räumlich getrennt. Auf diese Weise können die Meßdatenerfassung und deren Visualisierung von einem entfernten Kontrollzentrum über große Distanzen gesteuert und überwacht werden. Die Datenfernabfrage, die Auswertung der Daten im Kontrollzentrum und die Aussendung entsprechender Steuerbefehle für einzelne Verfahrensschritte minimiert den Personeneinsatz am Orte der Sanierungsvorrichtung.

Vorteilhafte Weiterbildungen der Erfindung sind durch die Merkmale der Unteransprüche gekennzeichnet.

Im folgenden wird die Erfindung anhand der Zeichnung näher beschrieben. Es zeigen:
- Fig. 1: eine schematische Darstellung einer ersten Ausführungsform der Vorrichtung als Blockschaltbild;
- Fig. 2: eine vereinfachte Darstellung der Vorrichtungskomponenten gemäß der Fig. 1;
- Fig. 3: einen kegelstumpfförmigen Photobioreaktor im Längsschnitt; und
- Fig. 4: eine schematische Darstellung einer zweiten Ausführungsform der Vorrichtung.

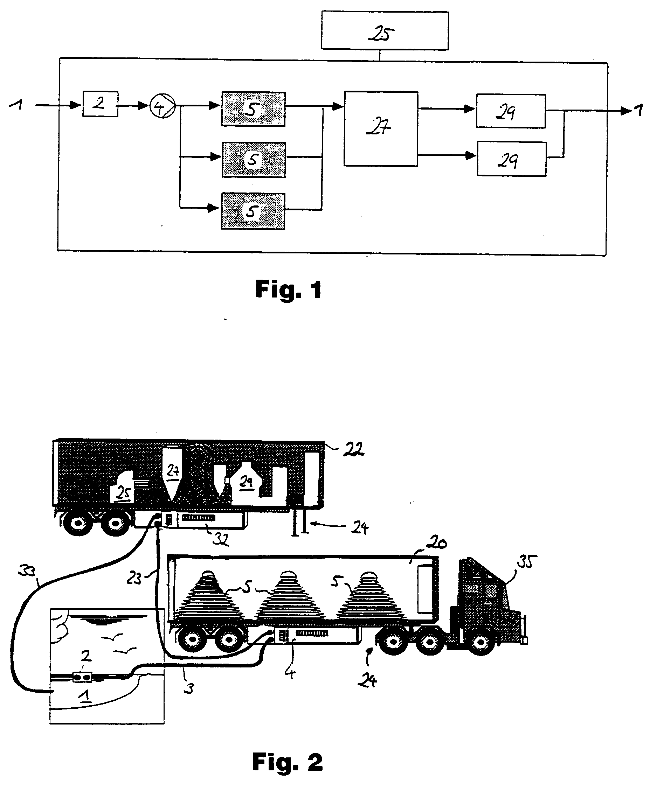

Wie dem in den Fig. 1 und 2 dargestellten ersten Ausführungsbeispiel zu entnehmen ist, werden aus dem Oberflächenbereich eines Sees 1 mit Hilfe eines Skimmers 2 und eines Schlauches 3 Wassermengen entnommen, die reich an Mikroalgen sowie Nährstoffen sind, darunter insbesondere Phosphor- und Stickstoffverbindungen. Eine Pumpe 4 fördert die Wassermengen zu drei parallel geschalteten Photobioreaktoren 5, welche in einem an den Seiten und nach oben offenen ersten Containermodul 20 angeordnet sind.

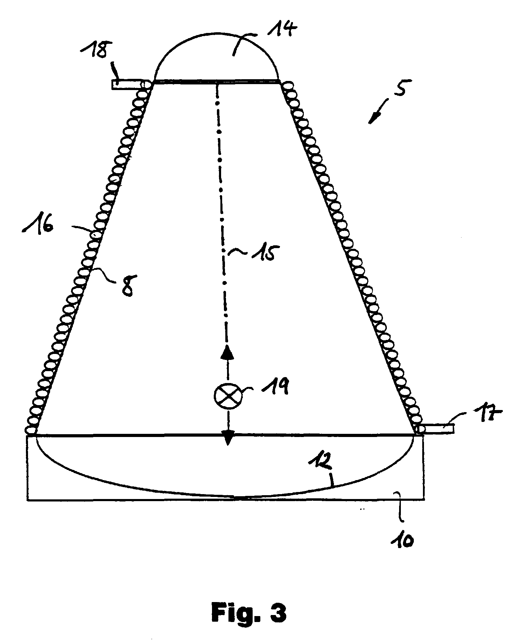

In Fig. 3 ist im Längsschnitt ein Photobioreaktor 5 gezeigt, der ein aufrecht auf einem Sockel 10 befestigtes kegelstumpfförmiges Trägergestell 8 mit einem auf dessen Außenseite aufgewickelten, transparenten und flexiblen Rohr 16 aufweist. Alternativ kann auch ein transparenter Schlauch verwendet werden. Das Trägergestell 8 weist geschlossene Wände auf und ist aus transparentem Kunststoff hergestellt. Auf das freie Ende des Rohres 16 im unteren Bereich des Trägergestells 8 ist ein Rohreinlaß 17 angesetzt, durch welchen das zu bestrahlende fluide Material in das Rohr 16 gepumpt wird. Das andere Ende des Rohres 16 im oberen Bereich des Reaktors weist einen Rohrauslaß 18 auf, durch den das fließende Material am Ende des Bestrahlungsvorgangs den Reaktor verläßt. Alternativ kann das Fluid das Rohr 16 auch von oben nach unten durchlaufen.

Im Innenraum des Reaktors 5 ist im Bereich seiner Hochachse eine in der Höhe verschieblich positionierbare Lichtquelle 19 angeordnet, die beispielsweise von einer Natrium-Dampflampe mit einem optimierten Lichtspektrum oder einer Pflanzenlichtleuchtstofflampe gebildet ist. Die Lichtquelle 19 wird zur kontinuierlichen Biomasseproduktion vorzugsweise nachts eingeschaltet, wenn die Photosyntheseaktivität wegen des fehlenden Tageslichts gering ist. Selbstverständlich ist eine durchgängige Benutzung der Lichtquelle 19 zur Unterstützung der vom Sonnenlicht angeregten Photosynthese ebenfalls möglich.

Oberhalb der obersten Rohrwindung ist mittig eine nach oben gewölbte plankonvexe Lichtsammellinse 14 angeordnet. Die Lichtsammellinse 14 ist als Haube ausgebildet, welche den Reaktor nach oben verschließt. Zusammen mit den geschlossenen Wänden des Trägergestells 8 schützt die Haube einerseits den Reaktorinnenraum 4 bei ungünstigen Witterungen, andererseits verhindert sie zu große Temperaturschwankungen innerhalb des Reaktors.

Im Sockel 10 des Photobioreaktors ist ein mit der Spiegelfläche nach oben gerichteter, konkaver Innenreflektor 12 eingefaßt, der sich im wesentlichen über die Grundfläche des Reaktors erstreckt und zur Erhöhung der Lichtausbeute Sonnenlicht und/oder künstliches Licht auf das Rohr 16 wirft. Die optische Achse 15 der Sammellinse 14 und diejenige des Innenreflektors fallen zusammen.

Durch die Bestrahlung des in den Photobioreaktor 5 geleiteten algen- und nährstoffhaltigen Wassergemenges mit Hilfe des Sonnenlichtes und/oder des künstlichen Lichtes der Lichtquelle 19 werden die Algen zu verstärkter Photosynthese angeregt, die die nötige Energie zur Aufnahme der Nährstoffe liefert. Aufgrund der induzierten Nährstoffaufnahme durch die Algen wird der Nährstoffanteil des Wassers am Auslaßstutzen 18 des Photobioreaktors 5 reduziert und im gleichen Verhältnis der Sauerstoffgehalt aufgrund der Sauerstoffproduktion während der Photosynthese erhöht, so daß aus dem Auslaßstutzen 18 des Photobioreaktors 5 nährstoffverarmtes und somit sauerstoffangereichtertes Wasser mitsamt den nährstoffangereicherten Algen abgegeben wird.

Nach Durchlaufen der Photobioreaktoren 5 werden das nährstoffreduzierte Wasser und die darin befindlichen nährstoffangereicherten Algen über Schläuche 23 zu einem Hydrozyklon 27 gepumpt, in welchem Störstoffe, insbesondere Sand, abgeschieden werden. Anschließend wird das algenhaltige Wasser zwei parallel geschalteten Separationseinrichtungen 29 zugeführt, welche Durchlaufzentrifugen und Sandfilter aufweisen. Hier findet eine Trennung des Wassers von den Algen statt. Während die Algen zur Weiterverwertung abtransportierbar sind, wird das gereinigte, geruchsarme und mit Sauerstoff angereicherte Wasser mit Hilfe von Pumpaggregaten 32 über Schläuche 33 in den See 1 zurückgeleitet. Jeder einzelne Verfahrensschritt ist mittels einer elektronischen Meß- und Regeleinrichtung 25 kontrollierbar.

Das Hydrozyklon 27, die Separationseinrichtungen 29 und die Meß- und Regeleinrichtung 25 sind in einem zweiten Containermodul 22 angeordnet. Die beiden Containermodule 20, 22 sind auf verfahrbaren Chassis 24 angeordnet, die beispielsweise von Zugmaschinen 35 an ihre jeweiligen Einsatzorte gebracht werden können, wodurch die Einsatzmöglichkeiten erheblich erweitert werden.

Die Verwendung von einem oder mehreren Hydrozyklonen 27 kann optional erfolgen, da die Effizienz der Abscheidung von Störstoffen in den Hydrozyklonen 27 je nach Gewässerbeschaffenheit variieren kann.

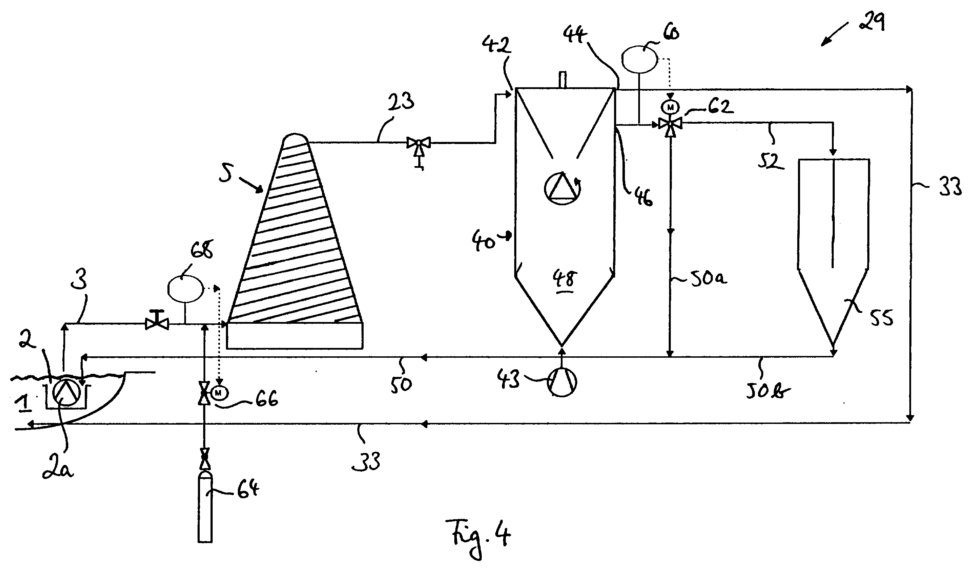

In Fig. 4 ist schematisch ein zweites Ausführungsbeispiel der erfindungsgemäßen Vorrichtung dargestellt, bei der die Separationseinrichtung 29 einen dynamischen Filter 40 mit einem Einlaß 42 und einem ersten Auslaß 44 und einem zweiten Auslaß 44 aufweist. Das dem Gewässer 1 über den mit einer Pumpe 2a versehenen Skimmer 2 und den ventilgesteuerten Schlauch 3 entnommene Gemenge wird nach Durchlaufen des Photobioreaktors 5 über eine ventilgesteuerte Leitung 23 dem Einlaß 42 des dynamischen Filters 44 zugeführt, in welchen körniges Filtermaterial, beispielsweise Sand und/oder Aktivtonerde, eingefüllt ist. Das Gemenge durchläuft das Filterbett 48, vorzugsweise in einer Aufwärtsbewegung, wobei Algen und Schwebstoffe im Filtermaterial zurückgehalten werden. Ein Teil des filtrierten Wassers verläßt den Filter 40 über den ersten Auslaß 44 und wird über die Leitung 33 in das Gewässer zurückgeleitet, während ein anderer Teil des filtrierten Wassers zur kontinuierlichen Reinigung des Filtermaterials verwendet wird. Hierzu wird das Filtermaterial mittels einer Pumpe 43 kontinuierlich gefördert, so daß es in einem Wäscherabschnitt von diesem Teil des filtrierten Wassers im Gegenstromprinzip durchlaufen wird. Hierbei gehen die Algen und die Trübstoffe von dem Filtermaterial in das Wasser über, welches als sog. Waschwasser über den zweiten Auslaß 46 den Filter 40 verläßt.

Das Waschwasser wird je nach Trübstoffgehalt, welcher von einer Meßstation 60 ermittelt wird, mittels eines entsprechend gesteuerten Ventils 62 entweder über Leitungen 50a, 50 zum Skimmer 2 oder in die Leitung 3 (die entsprechende Verbindungsleitung ist nicht dargestellt) zurückgeführt oder - bei höherem Trübungsgrad - über eine Leitung 52 durch einen Sackfilter 55 aus einem geeigneten, beispielsweise gewebtem, Filtermaterial geführt. Vom Sackfilter 55 läßt sich zumindest ein Teil des Waschwassers über die Leitungen 50b, 50 in den Skimmer 2 oder die Leitung 3 zurückführen. Auf diese Weise lassen sich Algen in dem Waschwasser für eine erneute Nährstoffaufnahme in dem Photobioreaktor 5 verwenden. Indem die Leitungen 50a, 50b, 50 zum Gewässer 1 hin abfallend angeordnet werden, kann bei der Rückführung des filtrierten Wassers und/oder des Waschwassers zum Gewässer 1 bzw dem Skimmer 2 vorteilhafterweise deren Schwerkraft ausgenutzt werden. Zusätzlich oder alternativ, beispielsweise zur Einspeisung des filtrierten Wassers bzw. des Waschwassers in die Leitung 3, kann auch eine Wasserstrahlpumpe (nicht dargestellt) eingesetzt werden.

Insbesondere bei Verwendung von Aktivtonerde als Filtermaterial in dem dynamischen Filter 40 zur Bindung von seitens der Algen nicht aufgenommenem Phopsphat ist es vorteilhaft, den pH-Wert des häufig basischen, zu filternden Gemenges durch Zugabe von Kohlendioxid zu senken, da die Phosphatbindung bei niedrigem pH-Wert bevorzugt ist. Zu diesem Zweck ist eine pH-Wert-Meßstation 68 vorgesehen, die ein Ventil 66 steuert, um ggf. Kohlendioxid aus einem Kohlendioxid-Vorrat 64 in die Leitung 3 einzulassen. Das Kohlendioxid wird bevorzugt vor Einleiten des Gemenges in den Photobioreaktor 5 zugesetzt, um aufgrund der somit erzielten Verwirbelung eine gute Löslichkeit des Kohlendioxids zur Bildung von Kohlensäure zu erzielen.

Beispielhaft sind im folgenden einige realistische Zahlenwerte genannt. Der beschriebene Photobioreaktor 5 weist zum Beispiel ein Volumen von ca. 100 l auf und wird mit einer Durchsatzrate von 7000 l/h oder höher betrieben. Der Einsatz des erfindungsgemäßen Verfahrens läßt sich sowohl für kleinere oder größere - künstliche oder natürliche - Oberflächengewässer einsetzen. So sind beispielsweise Seen einer Ausdehnung von ca. 10 ha für die Sanierung vorgesehen. Geht man davon aus, daß der Skimmer hierbei 50 cm unterhalb der Gewässeroberfläche plaziert wird, würden - ohne Einbeziehung des Rücklaufs des gereinigten Wassers - 50.000 m³ dem Gewässer entnommen. Aufgrund des zyklischen Betriebes erhöht sich die Durchsatzmenge noch in beträchtlichem Maße. Bei solch ausgedehnten Gewässern wird von einem Einsatz des erfindungsgemäßen Verfahrens über einige Jahren hinweg ausgegangen, wobei sich selbstverständlich die Einsatzdauer mit zunehmender Anzahl der verwendeten erfindungsgemäßen Vorrichtungen verkürzt.

## Patentansprüche

1. Verfahren zur Reduzierung des Algen- und Nährstoffgehalts eines Gewässers (1), insbesondere eines Oberflächengewässers, dadurch gekennzeichnet, daß
- dem Gewässer (1) algenhaltige Wassermengen entnommen werden;
- dem Gewässer (1) nährstoffhaltige Wassermengen entnommen werden;
- ein Gemenge der entnommenen Wassermengen derart bestrahlt wird, daß die Algen zumindest einen Teil der Nährstoffe aufgrund von photosynthetischer Aktivierung aufnehmen;
- die Algen zumindest teilweise vom Wasser getrennt werden; und
- das nährstoff- und algenreduzierte Wasser in das Gewässer (1) zurückgeleitet wird.

2. Verfahren nach Anspruch 1,
dadurch gekennzeichnet, daß die algenhaltigen Wassermengen und die nährstoffhaltigen Wassermengen identisch sind und dem Gewässer (1) in einem gemeinsamen Schritt entnommen werden.

3. Verfahren nach Anspruch 1 oder 2,
dadurch gekennzeichnet, daß die algenhaltigen Wassermengen dem Gewässer (1) mittels eines vorzugsweise etwa 10 bis 50 cm unterhalb der Gewässeroberfläche positionierbaren Skimmers (2) entnommen werden.

4. Verfahren nach einem der vorhergehenden Ansprüche,
dadurch gekennzeichnet, daß das Gemenge in einem oder mehreren hintereinander oder parallel geschalteten landseitigen Photobioreaktor(en) (5) mit natürlichem und/oder künstlichem Licht bestrahlt wird.

5. Verfahren nach einem der vorhergehenden Ansprüche,
dadurch gekennzeichnet, daß das zu bestrahlende Gemenge und/oder das Gewässer zusätzlich mit gewässerfremden Algen beimpft wird.

6. Verfahren nach einem der vorhergehenden Ansprüche,
dadurch gekennzeichnet, daß das Gemenge nach der Bestrahlung einer Separationseinrichtung (29) zugeführt wird, in dem Trübstoffe und Algen abgeschieden werden.

7. Verfahren nach Anspruch 6,
dadurch gekennzeichnet, daß das Gemenge durch einen dynamischen Filter (40) mit einem kontinuierlich bewegten Filterbett (48) aus körnigem Material, vorzugsweise Sand und/oder Aktivtonerde (Al2O3), geleitet wird, an welchem die Algen zur Trennung von dem Wasser zurückgehalten werden.

8. Verfahren nach Anspruch 7,
dadurch gekennzeichnet, daß bei Verwendung eines zumindest teilweise mit Aktivtonerde beschickten dynamischen Filters (40) Kohlendioxid vorzugsweise vor der Bestrahlung dem Gemenge zugegeben wird.

9. Verfahren nach Anspruch 7 oder 8,
dadurch gekennzeichnet, daß das im dynamischen Filter (40) filtrierte Wasser zu einem Teil über einen ersten Auslaß (44) aus dem dynamischen Filter herausgeleitet und zu einem anderen Teil als Waschwasser zur Reinigung des mit Algen beladenene Filtermaterials verwendet und anschließend über einen zweiten Auslaß (46) aus dem dynamischen Filter (40) herausgeleitet wird.

10. Verfahren nach Anspruch 9,
dadurch gekennzeichnet, daß das filtrierte Wasser in das Gewässer (1) zurückgeleitet und das Waschwasser mit dem aus dem Gewässer (1) entnommenen Gemenge vermischt und erneut der Bestrahlung zugeführt wird.

11. Verfahren nach einem der Ansprüche 5 bis 10,
dadurch gekennzeichnet, daß zwischen Photobioreaktor (5) und Separationseinrichtung (29) ein Hydrozyklon (27) zwischengeschaltet ist, in dem Störstoffe, wie beispielsweise Sand, abgeschieden werden.

12. Verfahren nach einem der vorhergehenden Ansprüche,
dadurch gekennzeichnet, daß die Entnahme der Wassermengen, die Lichtbestrahlung des Gemenges der Wassermengen, die Trennung von Wasser und Algen, sowie die Rückführung des algen- und nährstoffreduzierten Wassers in das Gewässer (1) in einem kontinuierlichen Durchflußprozeß durchgeführt werden.

13. Verfahren nach einem der vorhergehenden Ansprüche,
dadurch gekennzeichnet, daß mittels einer Meß- und Steuerregelung (25) Messungen des pH-Werts, des Trübstoffgehalts, der Sauerstoffkonzentration, der elektrischen Leitfähigkeit, der Temperatur, der Betriebsstundendauer und/oder des Volumenstroms durchgeführt werden und daß auf Basis dieser Meßwerte einzelne Verfahrensschritte (25) geregelt werden.

14. Vorrichtung zum Durchführen des Verfahrens gemäß einem der vorhergehenden Ansprüche, gekennzeichnet durch
eine Einrichtung (2, 3, 4) zur Entnahme algenhaltiger Wassermengen,
eine Einrichtung (2, 3, 4) zur Entnahme nährstoffhaltiger Wassermengen,
eine Einrichtung (5, 19) zur Bestrahlung eines Gemenges der entnommenen Wassermengen, wobei die Algen zumindest einen Teil der Nährstoffe aufgrund von photosynthetischer Aktivierung aufnehmen,
eine Einrichtung (29) zum zumindest teilweise Trennen der Algen vom Wasser, und
eine Einrichtung (32, 33) zum Zurückleiten des nährstoff- und algenreduzierten Wassers in das Gewässer.

15. Vorrichtung nach Anspruch 14,
dadurch gekennzeichnet, daß die Einrichtung zur Entnahme der algenhaltigen und/oder der nährstoffhaltigen Wassermengen einen positionierbaren Skimmer (2) umfaßt.

16. Vorrichtung nach Anspruch 14 oder 15,
dadurch gekennzeichnet, daß die Einrichtung zur Bestrahlung des Gemenges einen Photobioreaktor (5) mit einem Trägergestell (8) und mindestens einer am Trägergestell (8) angeordneten umlaufenden, transparenten rohrförmigen Leitung (16), durch welche das Gemenge geleitet wird, aufweist.

17. Vorrichtung nach einem der Ansprüche 14 bis 16,
dadurch gekennzeichnet, daß die Einrichtung zur Trennung der Algen und des Wassers eine Separationseinrichtung (29) umfaßt, welcher der Einrichtung (5) zur Bestrahlung des Gemenges nachgeschaltet ist.

18. Vorrichtung nach Anspruch 17,
dadurch gekennzeichnet, daß die Separationseinrichtung (29) wahlweise einen dynamischen Filter (40) mit einem kontinuierlich bewegten Filterbett (48) aus körnigem Material, eine Durchlaufzentrifuge (29), einen Sandfilter, vorzugsweise mit einer Kammerfilterpresse oder einer entsprechenden Entwässerungseinrichtung, einen Sackfilter (55) und/oder eine Sickergrube umfaßt.

19. Vorrichtung nach einem der Ansprüche 14 bis 18,
gekennzeichnet durch eine Meß- und Steuerregelung zur Messung des pH-Werts, des Trübstoffgehalts, der Sauerstoffkonzentration, der elektrischen Leitfähigkeit, der Temperatur, der Betriebsstundendauer und/oder des Volumenstroms durch die Einrichtung (5) zur Bestrahlung des Gemenges und zur Steuerung einzelner Verfahrensschritte auf Basis dieser Meßwerte.
